# FASCICULE DE BREVET EUROPEEN

(11) **EP 3 119 937 B1**
(45) Date de publication et mention de la délivrance du brevet: **16.05.2018**
(21) Numéro de dépôt: 15714954.3
(22) Date de dépôt: 19.03.2015
(51) Int. Cl.: D06P 3/60, D21H 21/28, D06P 1/94, D06P 1/649

(54) **PROCEDE DE COLORATION DE LA CELLULOSE**
VERFAHREN ZUM FÄRBEN VON CELLULOSE
METHOD FOR COLOURING CELLULOSE

(30) Priorité: 21.03.2014 FR 1452406
(43) Date de publication de la demande: 25.01.2017
(73) Titulaire: Commissariat à l'Énergie Atomique et aux Énergies Alternatives, 75015 Paris (FR)
(72) Inventeur: AUGER, Aurélien, F-38000 Grenoble (FR); PONCELET, Olivier, F-38000 Grenoble (FR)
(74) Mandataire: Nony
(86) Numéro de dépôt international: PCT/IB2015/052018
(87) Numéro de publication internationale: WO 2015/140750

(56) Documents cités:
- CN-A- 102 702 364
- DE-A1- 4 332 219

## Description

La présente invention se rapporte à un nouveau procédé de coloration de la cellulose du papier.

Les procédés de coloration de la cellulose, dans l'industrie papetière ou l'industrie textile, sont classiquement effectués en milieu aqueux. D'une manière générale, la fixation du colorant aux fibres de cellulose nécessite l'utilisation de grandes quantités de sels et d'ammoniaque, pour pallier la répulsion anionique entre le colorant et la cellulose. Or, ces sels et ammoniaque, de même que des produits secondaires formés conjointement, sont communément éliminés par lavage en fin de réaction. Les grandes quantités d'eau requises pour cette opération de lavage se trouvent donc fortement polluées et leur traitement complexe soulève, pour des raisons évidentes, un important problème économique et environnemental.

Il existe donc un fort besoin de disposer d'un procédé de coloration des fibres de cellulose plus écologique.

L'utilisation du CO₂ supercritique constitue une alternative intéressante pour remplacer l'eau dans les procédés de coloration des fibres de cellulose. On désignera indifféremment dans la suite du texte « CO₂ supercritique » et « sCO₂ ».

Le CO₂ supercritique possède de nombreux avantages par rapport à d'autres solvants. Il est de faible coût, non toxique, ininflammable, inerte chimiquement, et respectueux de l'environnement. C'est un très bon solvant des composés chimiques hydrophobes et non polaires. De par son importante diffusivité, sa densité élevée, et sa faible viscosité, il facilite la pénétration du colorant dans les fibres de cellulose, ce qui permet de diminuer le temps de réaction. La cellulose colorée obtenue ne nécessite pas de séchage ce qui permet d'économiser une grande quantité d'énergie. Avantageusement, la concentration en colorant requise est inférieure à celle nécessaire pour un procédé de coloration en milieu aqueux. De plus, le colorant, non fixé à une fibre cellulosique, peut être facilement séparé et récupéré en fin de réaction en diminuant simplement la pression du CO₂ supercritique. Le CO₂ et le colorant peuvent ainsi être réutilisés.

Toutefois, le CO₂ supercritique étant un bon solvant des composés hydrophobes et non chargés, il n'a que peu d'affinité pour la cellulose qui est quant à elle plutôt hydrophile et polaire.

Pour pallier ce défaut d'affinité, des alternatives ont déjà été proposées.

Ainsi, US 6,620,211 décrit une méthode de coloration de matériau textile, en milieu sCO₂, avec des colorants réactifs à l'égard des fibres de textile en présence d'agent d'hydratation.

Le brevet US 6,010,542, décrit pour sa part une méthode de coloration d'un substrat, en particulier de fibres textiles, en milieu sCO₂ et en présence d'un tensioactif. Cette méthode ne nécessite pas de hautes températures ni de hautes pressions, mais requiert un milieu réactionnel acide par l'emploi d'additifs comme l'acide carboxylique. Or, des conditions acides abîment les fibres de cellulose et sont même incompatibles avec la cellulose du papier.

Une autre alternative consiste à synthétiser de nouveaux dérivés de la cellulose, dotés de propriétés physicochimiques distinctes et en particulier hydrophobes à l'inverse de la cellulose native.

Ainsi, différentes voies ont déjà été explorées pour tenter de modifier les propriétés des fibres de cellulose de coton par exemple, et les rendre plus hydrophobes.

Une première voie consiste à former un xanthogénate de cellulose, mais le procédé forme également des produits secondaires dangereux comme CS₂, H₂S et des métaux lourds.

Une seconde voie consiste à associer la cellulose au cuivre et à l'ammoniaque mais ce procédé se heurte également à des obstacles environnementaux.

Une autre voie, plus respectueuse de l'environnement, est la technologie NMMO. Elle consiste en un système de solvant comprenant des oxydes d'amine cyclique, en particulier le N-oxyde de N-méthylmorpholine (NMMO), apte à dissoudre non seulement la cellulose mais également d'autres polymères.

Yin, C. *et al.* [1] proposent, pour leur part, de tirer avantage des propriétés du CO₂ supercritique pour synthétiser un carbamate de cellulose de coton, produit de l'estérification de la cellulose par l'urée.

US 5,578,088 décrit également une méthode permettant de colorer les fibres de cellulose d'un textile, en milieu CO₂ supercritique, en les modifiant au préalable par couplage covalent avec des dérivés aminés. Ces groupements permettent de rendre la cellulose compatible avec des colorants hydrophobes. Néanmoins, les composés aminés considérés sont de formules chimiques très complexes.

Quant au EP 1 809 806, il décrit quant à lui une méthode de coloration de fibres de cellulose d'un textile, en milieu CO₂ supercritique, en les pré-traitant avec un composé accepteur de liaisons hydrogène, de préférence un alcool. Cette méthode ne nécessite pas de tensioactif, mais requiert l'utilisation d'un milieu acide, par exemple H₃PO₄, qui abîme la cellulose et est incompatible avec la cellulose du papier en particulier.

En conséquence, les techniques actuellement disponibles ne donnent pas totalement satisfaction et il demeure un besoin de disposer d'un procédé simple permettant de colorer efficacement les fibres de cellulose, notamment du papier, dans le sCO₂ supercritique, et dans des conditions compatibles avec leur intégrité.

On peut encore citer le document DE 43 32 219 qui propose un procédé de teinture d'un matériau textile comme de la laine, de la soie ou d'un matériau contenant de la cellulose avec des colorants dispersés, où la cellulose est préalablement traitée avec un agent hydrophobe qui peut être par exemple la N-méthylol-hydroxyéthylène urée, puis teintée en milieu CO₂ supercritique avec le colorant dispersé.

Le document CN 102 702 364 décrit un procédé de préparation de carbamate de cellulose à partir de la cellulose et de l'urée en milieu CO₂ supercritique.

La présente invention vise précisément à proposer un procédé donnant satisfaction aux exigences précitées.

Ainsi, la présente invention concerne un procédé pour colorer la cellulose en milieu CO₂ supercritique par un colorant hydrophobe, comprenant au moins les étapes consistant en :
(i) disposer de fibres de cellulose,
(ii) mettre en présence lesdites fibres de cellulose avec :
   a) une quantité efficace d'au moins une mono organo-urée primaire, non chargée, et substituée par une chaîne hydrocarbonée linéaire ou ramifiée, saturée ou insaturée, et possédant au moins 3 atomes de carbone ou par un radical hydrocarboné cyclique, saturé ou insaturé, lié directement ou *via* un groupement méthylène ou éthylène à l'atome d'azote, le cas échéant substitués, dans des conditions propices à l'établissement de lien covalent de type carbamate entre la cellulose et chaque molécule de ladite organo-urée ; et
   b) au moins un colorant hydrophobe, en milieu CO₂ supercritique, dans des conditions propices à l'immobilisation dudit colorant sur lesdites fibres.

En particulier, la présente invention concerne un procédé de coloration de la cellulose en milieu CO₂ supercritique par un colorant hydrophobe, comprenant au moins les étapes consistant en :
(i) disposer de fibres de cellulose,
(ii) mettre en présence lesdites fibres de cellulose avec :
   a) au moins un dérivé d'urée ; et
   b) au moins un colorant hydrophobe, en milieu CO₂ supercritique, dans des conditions propices à l'immobilisation dudit colorant sur lesdites fibres ;
   caractérisé en ce que l'étape a) consiste en la mise en présence desdites fibres de cellulose avec une quantité efficace d'au moins une mono organo-urée primaire de formule R-NH-CO-NH₂, non chargée, dans laquelle R figure une chaîne hydrocarbonée linéaire ou ramifiée, saturée ou insaturée, et possédant au moins 3 atomes de carbone, ou un radical hydrocarboné cyclique, saturé ou insaturé, lié directement ou *via* un groupement méthylène ou éthylène à l'atome d'azote, le cas échéant substitués, dans des conditions propices à l'établissement de lien covalent de type carbamate entre la cellulose et chaque molécule de ladite organo-urée.

Selon un premier mode de réalisation, les mises en présence considérées en étapes (a) et (b) sont réalisées successivement.

Selon ce mode de réalisation, deux variantes peuvent être considérées.

Selon une première variante, la mise en présence des fibres de cellulose avec l'organo-urée primaire lors de l'étape a) est également réalisée en milieu CO₂ supercritique.

Selon une seconde variante, elle est réalisée en milieu solvant différent du CO₂ supercritique. Cette variante peut notamment être réalisée en milieu solvant en présence par exemple, du DMSO.

Selon un second mode de réalisation, la mise en présence des fibres de la cellulose avec l'organo-urée primaire est effectuée concomitamment à la mise en présence du colorant hydrophobe considéré.

L'invention vise en outre un matériau formé en tout ou partie de cellulose, coloré selon le procédé de l'invention, en particulier un papier.

Contre toute attente, les inventeurs ont découvert qu'il est possible de fixer, avec une efficacité améliorée, un ou plusieurs colorants hydrophobes sur les fibres de cellulose en milieu CO₂ supercritique, sous réserve que lesdites fibres y soient mises en oeuvre sous une forme modifiée avec une organo-urée primaire non chargée et substituée par une chaîne hydrocarbonée linéaire ou ramifiée, saturée ou insaturée, et possédant au moins 3 atomes de carbone ou par un radical hydrocarboné cyclique, saturé ou insaturé, lié directement ou *via* un groupement méthylène ou éthylène à l'atome d'azote, le cas échéant substitués, dans des conditions propices à l'établissement de lien covalent de type carbamate entre la cellulose et chaque molécule de ladite organo-urée.

Le procédé de l'invention s'avère avantageux à plusieurs titres. Tout d'abord, il est mis en oeuvre à un pH non acide et, en particulier, à un pH supérieur ou égal à 7. Ainsi, le procédé selon l'invention ne nécessite pas de conditions acides pour activer le colorant et accélérer sa réaction avec la cellulose et, à ce titre, est particulièrement avantageux pour la coloration de fibres cellulosiques de papier.

Le procédé selon l'invention ne nécessite pas non plus l'emploi de tensioactif.

L'utilisation d'une organo-urée conforme à l'invention, permet, en interagissant avec les fibres de cellulose, de conférer à celle-ci un caractère hydrophobe significatif. Les atomes d'azote de l'organo-urée constituent également des sites potentiels pour l'immobilisation du colorant. En outre, en se fixant sur les fibres de cellulose, les molécules d'organo-urée contribuent également à faciliter l'accessibilité de ces fibres au colorant.

Le procédé est écologique. Il a lieu en milieu sCO₂, et ne requiert pas l'usage d'eau.

Il permet avantageusement d'éviter la formation de produits secondaires dangereux pour l'environnement, et de s'affranchir de l'étape de lavage nécessaire selon le procédé classique décrit précédemment.

De par son importante diffusivité, sa densité élevée, et sa faible viscosité, le sCO₂ facilite la pénétration du colorant dans les fibres de cellulose, ce qui permet de diminuer le temps de réaction.

La cellulose colorée obtenue ne nécessite pas de séchage ce qui permet également d'économiser une grande quantité d'énergie.

Enfin, la concentration en colorant requise est inférieure à celle nécessaire pour un procédé de coloration en milieu aqueux. Qui plus est, le colorant, n'ayant pas été fixé, peut être facilement séparé et récupéré en fin de réaction en diminuant simplement la pression du CO₂ supercritique. Le CO₂ ainsi que cet excès de colorant peuvent ainsi être réutilisés.

D'autres caractéristiques, avantages, et modes d'application du procédé selon l'invention ressortiront mieux à la lecture de la description qui va suivre, donnée à titre illustratif et non limitatif.

Dans la suite du texte, les expressions « *compris entre* ... *et* ... », *« allant de* ... *à* ... » et « *variant de* ... *à* ... » sont équivalentes et entendent signifier que les bornes sont incluses, sauf mention contraire.

Sauf indication contraire, l'expression « *comportant*/*comprenant un(e)* » doit être comprise comme « *comportant*/*comprenant au moins un(e) ».*

### La cellulose

La cellulose est un polysaccharide linéaire naturel. Il représente le biopolymère le plus abondant et régénérable. Il est le principal constituant des végétaux et en particulier de la paroi de leurs cellules. Ce biopolymère consiste en la succession d'unités β-D-glucopyranosidiques liées entre elles par des liaisons β-1,4-glycosidiques. Les macromolécules de cellulose associées forment des microfibrilles, qui elles-mêmes associées en couches, forment des macrofibrilles puis des fibres de cellulose. Il s'établit des liaisons hydrogène entre les molécules de glucose des différentes chaînes.

Ses propriétés sont déterminées par la présence des nombreuses liaisons hydrogène intramoléculaires et par sa structure partiellement cristalline et partiellement amorphe.

Ainsi, de par la présence de ses très nombreux groupes hydroxyles, la cellulose est polaire et hydrophile.

Par ailleurs, du fait de ses caractéristiques structurales, la cellulose n'est pas soluble dans les solvants organiques classiques, et n'a pas d'affinité intrinsèque pour les colorants, pour la plupart hydrophobes.

La modification de la cellulose, considérée selon l'invention, permet précisément de lui conférer une affinité pour les molécules de colorant hydrophobes, sans altérer l'intégrité de ses fibres.

Dans le cas du papier en particulier, les fibres de cellulose sont, en effet, plus fragiles que dans le coton par exemple, et leur traitement s'avère plus délicat. La cellulose du papier est par exemple incompatible avec un traitement en milieu acide.

Dans le cadre de l'invention, ce caractère hydrophobe est établi *via* la formation de motifs carbamate de cellulose, R-NH-CO-O-Cellulose, produits de la réaction entre la cellulose et une organo-urée primaire avec R représentant le résidu de l'organo-urée considérée.

### La mono organo-urée primaire

Dans le cadre de la présente invention, l'organo-urée nécessaire à la modification des propriétés de la cellulose est une mono organo-urée primaire.

Contre toute attente, les inventeurs ont en effet constaté que ce type d'urée s'avère plus avantageux que les organo-urée secondaires et tertiaires.

Avantageusement, l'organo-urée primaire est substituée par un motif carboné apte à conférer à la cellulose modifiée un caractère suffisamment hydrophobe lui permettant d'être soluble dans le sCO₂ et d'interagir avec les molécules de colorant hydrophobes.

Une mono organo-urée convenant à l'invention peut être de formule R-NH-CO-NH2 dans laquelle R figure une chaîne hydrocarbonée linéaire ou ramifiée, saturée ou insaturée, et possédant au moins 3 atomes de carbone ou un radical hydrocarboné cyclique, saturé ou insaturé, lié directement ou *via* un groupement méthylène ou éthylène à l'atome d'azote, le cas échéant substitués.

Au sens de l'invention, le terme « hydrocarboné » qualifie le fait que le motif considéré est constitué pour l'essentiel d'atomes de carbone et d'hydrogène. Le cas échéant, des hétéroatomes peuvent toutefois être également présents.

Selon une première variante, R figure une chaîne alkyle possédant au moins 6 atomes de carbone et de préférence au moins 8 atomes de carbone.

De préférence, la chaîne hydrocarbonée R possède un squelette linéaire saturé comportant de 6 à 12 atomes de carbone.

Le cas échéant, la chaîne hydrocarbonée R peut comprendre un ou plusieurs hétéroatomes tels que l'oxygène.

Selon une seconde variante, R figure un radical cyclique au moins en C₆ et de préférence un radical aromatique. Il peut notamment s'agir d'un hétérocycle ou d'un cycle hétéroaromatique, l'hétéroatome pouvant être un atome d'oxygène, de soufre ou d'azote.

Les substituants susceptibles d'être présents peuvent être notamment choisis parmi les atomes d'halogène, les radicaux alkyle ou alcoxy, notamment en C₁ à C₅, les cycles ou hétérocyles en C₄ à C₆, saturés ou insaturés.

Bien entendu, ces substituants sont choisis pour leur inertie au regard des interactions, d'une part, entre la cellulose et l'organo-urée, et, d'autre part, entre la cellulose ainsi modifiée et les colorants à immobiliser, requises selon l'invention.

L'homme du métier est à même de procéder à ce choix.

Selon une autre de ses spécificités, l'organo-urée selon l'invention est non chargée ou en d'autres termes, n'est pas à l'état ionique.

Avantageusement, les organo-urées aptes à modifier la cellulose selon le procédé de l'invention sont choisies parmi :
- l'octylurée,
- l'octadécylurée,
- la 4-méthoxyphénylurée,
- la N-phénylurée,
- la benzylurée,
- la butylurée,
- l'allylurée, et
- la 3-fluorophénylurée.

Certains de ces produits, à l'image notamment de la 4-méthoxyphénylurée, sont des produits commercialisés.

Dans tous les cas, ils sont accessibles par synthèse. On peut notamment se référer au procédé décrit par Wertheim, E. [2].

Selon un mode de réalisation particulier, la concentration en organo-urée primaire appropriée pour modifier la cellulose est comprise entre 1 et 20 % en poids par rapport au poids de cellulose à traiter.

### Le colorant

Selon un mode de réalisation particulier, la molécule de colorant est hydrophobe, non chargée, et possède un groupement chromophore.

En particulier, les colorants pouvant être considérés selon l'invention sont :
- les colorants triazine, par exemple l'acide 4,4',4"-s-triazine-2,4,6-triyl-tribenzoïque,
- les colorants carbonylés, par exemple la 1,4-Bis(pentylamino)anthraquinone commercialisée sous la dénomination Oil blue N® par la société Sigma Aldrich,
- les colorants sulfurés, par exemple l'anhydride cyclique de l'acide 2-sulfobenzoïque, ou le rouge de phénol par exemple commercialisé par la société Sigma Aldrich,
- les colorants anthraquinones par exemple le 1-amino-9,10-dihydro-9,10-dioxo-4-(2,4,6-triméthylanilino)anthracène-2-sulphonate de sodium tel que commercialisé par la société Sigma Aldrich sous la dénomination Acid Blue 129®, la 1-aminoanthraquinone, ou le 3,4-Dihydroxy-9,10-dioxo-2-anthracènesulfonate de sodium commercialisé sous le nom Alizarin Red S® par la société Sigma Aldrich, et
- les colorants azoïques, par exemple la *N*-Ethyl-*N*-(2-hydroxyéthyl)-4-(4-nitrophénylazo)aniline telle que commercialisée sous la dénomination Disperse Red 1® par la société Sigma Aldrich, le 2,2'-[[4-[(4-Nitrophenyl)azo]phenyl]imino]biséthanol commercialisé sous le nom Disperse Red 19® par la société Sigma Aldrich, le 2-[4-(2-Chloro-4-nitrophénylazo)-*N*-éthylphénylamino]éthanol commercialisé sous le nom Disperse Red 13® par la société Sigma Aldrich, la 4-(4-Nitrophénylazo)aniline telle que commercialisée sous la dénomination Disperse Orange 3® par la société Sigma Aldrich, ou la *N*-Ethyl-1-(4-(phénylazo)phénylazo)-2-naphthylamine commercialisée sous le nom Sudan Red 7B® par la société Sigma Aldrich.

Plus particulièrement, le colorant est choisi parmi le Foron Bleu RD-E® commercialisé par la société Clariant, le 2-[4-(2-Chloro-4-nitrophénylazo)-*N-*éthylphénylamino]éthanol commercialisé sous le nom Disperse Red 13® par la société Sigma Aldrich, et le 4-(2-Hydroxy-5-méthylphénylazo)acetanilide tel que commercialisé sous la dénomination Disperse Yellow 3® par la société Sigma Aldrich.

La concentration en colorant est avantageusement comprise entre 1 % et 20 % en poids par rapport au poids de cellulose à traiter.

### Le CO₂ supercritique

De par ses propriétés, le CO₂ supercritique possède de nombreux avantages par rapport à d'autres solvants. Notamment, le point critique du CO₂ se situant à 31°C, il est possible de travailler à basse température et éviter ainsi la dénaturation du produit à traiter.

Sa solubilité peut être modulée en fonction de sa température et de sa pression.

De par son importante diffusivité, sa densité élevée, et sa faible viscosité, il facilite la pénétration des molécules de colorant dans les fibres de cellulose, ce qui permet de diminuer le temps de réaction, mais également la quantité de colorant nécessaire pour colorer la cellulose, comparativement à un procédé conventionnel en milieu solvant liquide.

Par ailleurs, en fin de réaction, les produits réactionnels et le CO₂ peuvent être facilement séparés et récupérés en diminuant simplement la pression du CO₂ supercritique, qui redevient CO₂ gaz. Ainsi, le CO₂ et le colorant en excès peuvent être réutilisés. Le CO₂ en particulier peut être réutilisable quasi-infiniment.

### Le procédé : modification et coloration de la cellulose

La présente invention vise un procédé pour colorer la cellulose dans le CO₂ supercritique par un colorant hydrophobe, comprenant au moins les étapes consistant en :
(i) disposer de fibres de cellulose
(ii) mettre en présence lesdites fibres de cellulose avec :
   a) une quantité efficace d'au moins une mono organo-urée primaire, non chargée, et substituée par une chaîne hydrocarbonée linéaire ou ramifiée, saturée ou insaturée, et possédant au moins 3 atomes de carbone ou par un radical hydrocarboné cyclique, saturé ou insaturé, lié directement ou *via* un groupement méthylène ou éthylène à l'atome d'azote et le cas échéant substitués, dans des conditions propices à l'établissement de lien covalent de type carbamate entre la cellulose et chaque molécule de ladite organo-urée ; et
   b) au moins un colorant hydrophobe, en milieu CO₂ supercritique, dans des conditions propices à l'immobilisation dudit colorant sur lesdites fibres.

En particulier, la mono organo-urée primaire est de formule R-NH-CO-NH₂, non chargée, dans laquelle R figure une chaîne hydrocarbonée linéaire ou ramifiée, saturée ou insaturée, et possédant au moins 3 atomes de carbone, ou un radical hydrocarboné cyclique, saturé ou insaturé, lié directement ou *via* un groupement méthylène ou éthylène à l'atome d'azote, le cas échéant substitués.

De préférence, le milieu CO₂ supercritique est généré *in situ* par chauffage sous pression de CO₂ liquide.

Par ailleurs, les mises en présence considérées en étapes a) et b) sont avantageusement réalisées au sein d'un même réacteur.

Selon un premier mode de réalisation, les mises en présence considérées en étapes (a) et (b) sont réalisées successivement.

Dans ces circonstances, la cellulose est d'abord traitée par l'organo-urée primaire, en milieu sCO₂ ou non, pour former un carbamate de cellulose R-NH-CO-O-Cellulose. Les chaînes alkyles R ainsi introduites en surface des fibres de cellulose ont l'avantage de conférer à la cellulose des propriétés hydrophobes et de représenter également des sites accessibles au colorant sur lesquels ledit colorant peut venir s'immobiliser, par interactions de type Van der Waals.

Si l'interaction est réalisée en milieu CO₂ supercritique, elle est généralement réalisée dans un autoclave. Ce type de réacteur est chargé avec de la cellulose et une organo-urée primaire telle que définie précédemment. Le réacteur est scellé puis chargé en CO₂ liquide. En particulier, les conditions de température et de pression sont ajustées, à l'intérieur du réacteur, jusqu'à atteindre une température et une pression pour lesquelles le CO₂ liquide est converti en CO₂ supercritique. Après stabilisation du système, le réacteur est conservé dans ces conditions afin de permettre une bonne diffusion et une répartition homogène des molécules hydrophobes d'organo-urée au coeur du substrat de cellulose, et former le carbamate de cellulose R-NH-CO-O-Cellulose attendu.

Après ce pré-traitement, le colorant est introduit dans le réacteur, dans lequel les conditions de température et de pression mises en oeuvre précédemment lors de l'étape a) sont appliquées une seconde fois. Les propriétés du CO₂ supercritique lui permettent de diffuser, de transporter et de répartir de façon homogène les molécules de colorant à l'intérieur du « matelas » de fibres cellulosiques. Les molécules de colorant s'adsorbent alors sur les motifs hydrocarbonés, c'est-à-dire les chaînes hydrocarbonées ou les radicaux hydrocarbonés cycliques du carbamate de cellulose. La pression est ensuite diminuée lentement et le chauffage arrêté. Un substrat de cellulose, coloré à coeur, est alors obtenu.

Selon une seconde variante de réalisation, le traitement de la cellulose par l'organo-urée primaire peut être effectué en milieu solvant, en particulier aqueux, notamment en présence de diméthysulfoxyde (DMSO).

Selon ce mode de réalisation, la cellulose pré-traitée sous forme de carbamate de cellulose est ensuite mise en présence avec le colorant dans un réacteur alimenté en CO₂ supercritique. Les conditions de température et de pression appliquées, identiques à celles décrites précédemment, sont également maintenues afin de permettre une bonne diffusion et une répartition homogène des molécules hydrophobes d'organo-urée et de colorant au coeur du substrat de cellulose. Ce traitement permet d'obtenir un substrat coloré à coeur avec les molécules de colorant adsorbées sur les chaînes hydrocarbonées ou les radicaux hydrocarbonés cycliques du carbamate de cellulose. La pression est ensuite diminuée lentement et le chauffage arrêté. Le substrat coloré est alors sorti de l'autoclave.

Selon un second mode de réalisation, les étapes (a) et (b) sont réalisées de façon concomitante.

Selon ce mode de réalisation, l'autoclave est chargé avec un substrat de cellulose, l'organo-urée primaire, ainsi que le colorant hydrophobe choisi. L'autoclave est scellé puis chargé en CO₂ liquide. La température et la pression sont ajustées afin de convertir le CO₂ liquide en CO₂ supercritique, qui diffuse et transporte l'organo-urée ainsi que le colorant dans le matelas de fibres cellulosiques. Après stabilisation du système, le réacteur est gardé sous ces conditions afin de permettre une bonne diffusion et une répartition homogène des molécules hydrophobes d'organo-urée et de colorant au coeur du substrat de cellulose. La pression est ensuite diminuée lentement et le chauffage arrêté. Un substrat de cellulose, coloré à coeur, est alors obtenu.

La température appliquée lors des étapes a) et b) est avantageusement comprise entre 100 et 140 °C, de préférence entre 120°C et 130°C.

Par ailleurs, la pression appliquée lors des étapes a) et b) est avantageusement comprise entre 250 bar et 350 bar, de préférence entre 280 bar et 320 bar.

En particulier, les conditions de température et de pression appliquées lors des étapes a) et b), réalisées successivement ou de façon concomitante sont maintenues pendant une durée variant de 1 minute à 60 minutes, plus particulièrement de 10 minutes à 40 minutes.

En particulier, le procédé selon l'invention est avantageusement opéré en conditions anhydres. Au sens de l'invention, « conditions anhydres » signifie que les milieux réactionnels ne sont pas complémentés en eau. L'eau naturellement contenue dans la cellulose demeure en revanche présente.

Avantageusement, le procédé selon l'invention ne nécessite pas l'emploi de tensioactif.

En particulier, le substrat de cellulose est un papier.

### Applications

Le procédé considéré selon l'invention peut être mis en oeuvre afin de traiter des fibres de cellulose formant différents substrats.

Ainsi, il peut notamment s'agir de papiers, ou de textiles.

Dans les industries papetière et textile, un tel procédé permet de colorer le papier selon une mise en oeuvre écologique, et d'obtenir un substrat coloré à coeur, possédant une bonne tenue de la couleur dans le temps.

En particulier, un textile obtenu selon le procédé de l'invention possède une très bonne tenue notamment au lavage et au frottage.

Au regard de sa fonctionnalisation avec des motifs carbamates, le papier obtenu selon l'invention peut avantageusement se prêter à des modifications annexes. Ainsi, il peut être possible de lui conférer en outre des propriétés hydrophobes, ou oléophobes par greffage consécutif avec des motifs chimiques adéquats.

Un substrat cellulosique coloré et hydrophobe est notamment intéressant dans l'industrie textile. Cette propriété peut être utilisée pour la confection de blouses de protection.

Cette propriété peut par exemple être utile dans la marine pour la confection des cartes, susceptibles d'être en contact avec l'eau.

De la même manière, un substrat cellulosique coloré et oléophobe peut être particulièrement intéressant par exemple dans le domaine de la restauration pour les livres de cuisine et les vêtements de protection.

Le procédé selon l'invention peut également être mis en oeuvre lors de la fabrication de papiers calque par exemple.

Un papier calque est un papier particulièrement dense et dur comparativement à la plupart des autres formes de papier. Par conséquent, il s'agit d'un papier fragile et susceptible de se déchirer facilement lorsqu'il est plié. Un tel traitement en présence d'une organo-urée primaire en milieu sCO₂ permet d'obtenir un papier possédant une meilleure résistance au pliage, à l'étirement, mais aussi à l'eau.

### Références

[1] Yin, C. et al. Carbohydrate Polymers, 2007, 67, 147-154
[2] Wertheim, E. JACS, 1931, 53(1), 200

### Exemple 1 : Coloration d'un papier buvard en deux étapes, par le colorant Disperse Red 13®

Un autoclave, de type microréacteur, est chargé avec 1,62 g de papier buvard et 162 mg d'octadécylurée. Le réacteur est scellé puis chargé en CO₂ liquide.

Les conditions de température et de pression sont ajustées, à l'intérieur du réacteur, jusqu'à atteindre une température de 130°C et une pression de 280 bar. Après stabilisation du système, le réacteur est gardé 10 minutes dans ces conditions. A l'issue de ce pré-traitement, le carbamate de cellulose est obtenu.

100 mg de colorant Disperse Red 13® sont alors introduit dans le réacteur. Les mêmes conditions de température et de pression que celles mises en oeuvre précédemment sont appliquées une seconde fois pendant 10 minutes. La pression est ensuite diminuée lentement et le chauffage arrêté. Le papier obtenu, coloré à coeur, est alors sorti de l'autoclave.

Le CO₂ liquide et le colorant en excès sont facilement séparés et peuvent être réutilisés.

### Exemple 2 : Coloration d'un papier buvard en une seule étape, par le colorant Disperse Red 13®

Un autoclave est chargé avec 1,62 g de papier buvard, 162 mg d'octadécylurée, et 100 mg de colorant Disperse Red 13®. L'autoclave est scellé puis chargé en CO₂ liquide.

La température est ajustée à 130°C et la pression à 280 bar afin de convertir le CO₂ liquide en CO₂ supercritique.

Après stabilisation du système, le réacteur est gardé sous ces conditions pendant 10 minutes. La pression est ensuite diminuée lentement et le chauffage arrêté. Le papier obtenu, coloré à coeur, est alors sorti de l'autoclave.

Le CO₂ liquide et le colorant en excès sont facilement séparés et peuvent être réutilisés.

### Exemple 3 : Coloration d'un papier buvard par le colorant Foron Bleu RD-E®

Un autoclave est chargé avec 1,20 g de papier buvard, 100 mg d'octadécylurée, et 100 mg de colorant Foron Bleu RD-E®. L'autoclave est scellé puis chargé en CO₂ liquide.

La température est ajustée à 120°C et la pression à 310 bar afin de convertir le CO₂ liquide en CO₂ supercritique.

Après stabilisation du système, le réacteur est gardé sous ces conditions pendant 10 minutes. La pression est ensuite diminuée lentement et le chauffage arrêté. Le papier obtenu, coloré à coeur, est alors sorti de l'autoclave.

### Exemple 4 : Coloration d'un papier buvard par le colorant Disperse Red 13®

Un autoclave est chargé avec 1,25 g de papier buvard, 100 mg de 4-méthoxyphénylurée, et 100 mg de colorant Disperse Red 13®. L'autoclave est scellé puis chargé en CO₂ liquide.

La température est ajustée à 120°C et la pression à 260 bar afin de convertir le CO₂ liquide en CO₂ supercritique.

Après stabilisation du système, le réacteur est gardé sous ces conditions pendant 10 minutes. La pression est ensuite diminuée lentement et le chauffage arrêté. Le papier obtenu, coloré à coeur, est alors sorti de l'autoclave.

### Exemple 5 : Coloration d'un papier buvard par le colorant Disperse Red 19®

Un autoclave est chargé avec 1,15 g de papier buvard, 100 mg de 4-méthoxyphénylurée, et 100 mg de colorant Disperse Red 19®. L'autoclave est scellé puis chargé en CO₂ liquide.

La température est ajustée à 140°C et la pression à 280 bar afin de convertir le CO₂ liquide en CO₂ supercritique.

Après stabilisation du système, le réacteur est gardé sous ces conditions pendant 10 minutes. La pression est ensuite diminuée lentement et le chauffage arrêté. Le papier obtenu, coloré à coeur, est alors sorti de l'autoclave.

## Revendications

1. Procédé de coloration de la cellulose en milieu CO₂ supercritique par un colorant hydrophobe, comprenant au moins les étapes consistant en :
(i) disposer de fibres de cellulose,
(ii) mettre en présence lesdites fibres de cellulose avec :
a) au moins un dérivé d'urée ; et
b) au moins un colorant hydrophobe, en milieu CO₂ supercritique, dans des conditions propices à l'immobilisation dudit colorant sur lesdites fibres ;
**caractérisé en ce que** l'étape a) consiste en la mise en présence desdites fibres de cellulose avec une quantité efficace d'au moins une mono organo-urée primaire de formule R-NH-CO-NH₂, non chargée, dans laquelle R figure une chaîne hydrocarbonée linéaire ou ramifiée, saturée ou insaturée, et possédant au moins 3 atomes de carbone, ou un radical hydrocarboné cyclique, saturé ou insaturé, lié directement ou *via* un groupement méthylène ou éthylène à l'atome d'azote, le cas échéant substitués, dans des conditions propices à l'établissement de lien covalent de type carbamate entre la cellulose et chaque molécule de ladite organo-urée.

2. Procédé selon la revendication 1, dans lequel les mises en présence considérées en étapes a) et b) sont réalisées successivement.

3. Procédé selon la revendication 1, dans lequel les mises en présence considérées en étapes a) et b) sont réalisées de façon concomitante.

4. Procédé selon l'une quelconque des revendications précédentes, dans lequel le milieu CO₂ supercritique est généré *in situ* par chauffage sous pression de CO₂ liquide.

5. Procédé selon l'une quelconque des revendications précédentes, dans lequel les mises en présence considérées en étapes a) et b) sont réalisées au sein d'un même réacteur.

6. Procédé selon la revendication 2, dans lequel l'étape a) est réalisée en milieu solvant, notamment en présence de diméthylsulfoxyde, et l'étape b) est réalisée en milieu CO₂ supercritique.

7. Procédé selon l'une quelconque des revendications précédentes, dans lequel la concentration en organo-urée primaire est comprise entre 1 % et 20 % en poids par rapport au poids de cellulose à traiter.

8. Procédé selon l'une quelconque des revendications précédentes, dans lequel la concentration en colorant est comprise entre 1 % et 20 % en poids par rapport au poids de cellulose à traiter.

9. Procédé selon l'une quelconque des revendications précédentes, dans lequel l'organo-urée est choisie parmi la 4-méthoxyphénylurée, l'octadécylurée, et l'octylurée, la N-phénylurée, la benzylurée, la butylurée, l'allylurée, et la 3-fluorophénylurée.

10. Procédé selon l'une quelconque des revendications précédentes, dans lequel la température appliquée lors des étapes a) et b) est comprise entre 100°C et 140°C, de préférence entre 120°C et 130°C.

11. Procédé selon l'une quelconque des revendications précédentes, dans lequel la pression appliquée lors des étapes a) et b) est comprise entre 250 bar et 350 bar, de préférence entre 280 bar et 320 bar.

12. Procédé selon l'une quelconque des revendications précédentes, dans lequel les conditions de température et de pression appliquées lors des étapes a) et b), réalisées successivement ou de façon concomitante sont maintenues pendant une durée variant de 1 minute à 60 minutes, plus particulièrement de 10 minutes à 40 minutes.

13. Procédé selon l'une quelconque des revendications précédentes, dans lequel la cellulose est une cellulose de papier.

14. Papier coloré obtenu selon le procédé décrit selon l'une quelconque des revendications précédentes.

## Patentansprüche

1. Verfahren zum Färben von Cellulose in einem superkritischen CO₂ Milieu mit einem hydrophoben Färbemittel, mit wenigstens den Schritten, die bestehen in:
(i) Bereitstellen von Cellulosefasern,
(ii) In-Kontakt-Bringen der Cellulosefasern mit:
a) wenigstens einem Harnstoffderivat; und
b) wenigstens einem hydrophoben Färbemittel, in dem superkritischen CO₂ Milieu, unter Bedingungen, die die Fixierung des Färbemittels auf den Fasern begünstigen;
**dadurch gekennzeichnet, dass** der Schritt a) darin besteht, dass die Cellulosefasern mit einer wirksamen Menge wenigstens eines ungeladenen primären Mono-Organohamstoffs mit der Formel R-NH-CO-NH₂ in Kontakt gebracht werden, wobei R für eine lineare oder verzweigte, gesättigte oder ungesättigte Kohlenwasserstoffkette mit wenigstens drei Kohlenstoffatomen oder für ein gesättigtes oder ungesättigtes zyklisches Kohlenwasserradikal steht, das direkt oder über eine Methylgruppe oder Ethylgruppe mit dem Stickstoffatom verbunden ist, gegebenenfalls substituiert, unter Bedingungen, die die Entstehung einer kovalenten Bindung vom Carbamat-Typ zwischen der Cellulose und jedem Molekül des Organoharnstoffs begünstigen.

2. Verfahren nach Anspruch 1, bei dem die Schritte des In-Kontakt-Bringens in den Schritten a) und b) nacheinander erfolgen.

3. Verfahren nach Anspruch 1, bei dem die Schritte des In-Kontakt-Bringens in den Schritten a) und b) begleitend erfolgen.

4. Verfahren nach einem der vorstehenden Ansprüche, bei dem das superkritische CO₂ Milieu in situ durch Erhitzen von flüssigem CO₂ unter Druck erzeugt wird.

5. Verfahren nach einem der vorstehenden Ansprüche, bei dem die Schritte des In-Kontakt-Bringens in den Schritten a) und b) im Inneren desselben Reaktors erfolgen.

6. Verfahren nach Anspruch 2, bei dem der Schritt a) in einem Lösemittelmilieu erfolgt, insbesondere in Gegenwart von Dimethylsulfoxyd, und der Schritt b) in dem superkritischen CO₂ Milieu erfolgt.

7. Verfahren nach einem der vorstehenden Ansprüche, bei dem die Konzentration des primären Organoharnstoffs zwischen 1 und 20 Gew.% in Bezug auf das Gewicht der zu behandelnden Cellulose beträgt.

8. Verfahren nach einem der vorstehenden Ansprüche, bei dem die Konzentration des Färbemittels zwischen 1 und 20 Gew.% bezogen auf das Gewicht der zu behandelnden Cellulose beträgt.

9. Verfahren nach einem der vorstehenden Ansprüche, bei dem der Organoharnstoff ausgewählt ist unter 4-Methoxyphenylharnstoff, Octadecylharnstoff und Octylharnstoff, N-Phenylhamstoff, Benzylharnstoff, Butylharnstoff, Allylharnstoff und 3-Fluorphenylharnstoff.

10. Verfahren nach einem der vorstehenden Ansprüche, bei dem die bei den Schritten a) und b) herrschende Temperatur zwischen 100° C und 140° C, vorzugsweise zwischen 120° C und 130° C beträgt.

11. Verfahren nach einem der vorstehenden Ansprüche, bei dem der bei den Schritten a) und b) herrschende Druck zwischen 250 bar und 350 bar, vorzugsweise zwischen 280 bar und 320 bar beträgt.

12. Verfahren nach einem der vorstehenden Ansprüche, bei dem die Temperatur- und Druckbedingungen in den Schritten a) und b), die nacheinander oder begleitend hergestellt werden, für eine Dauer zwischen 1 Minute und 60 Minuten, insbesondere zwischen 10 Minuten und 40 Minuten aufrechterhalten werden.

13. Verfahren nach einem der vorstehenden Ansprüche, bei dem die Cellulose eine Papiercellulose ist.

14. Gefärbtes Papier, erhalten mit einem Verfahren wie in einem der vorstehenden Ansprüche beschrieben.

## Claims

1. A process for coloring cellulose in supercritical CO₂ medium with a hydrophobic dye, comprising at least the steps consisting in:
(i) providing cellulose fibers,
(ii) placing said cellulose fibers in contact with:
a) at least one urea derivative; and
b) at least one hydrophobic dye, in supercritical CO₂ medium, under conditions suitable for immobilizing said dye on said fibers;
**characterized in that** step a) consists in placing said cellulose fibers in contact with an effective amount of at least one uncharged primary monoorganourea of formula R-NH-CO-NH₂, in which R features a linear or branched, saturated or unsaturated hydrocarbon-based chain, bearing at least 3 carbon atoms, or a saturated or unsaturated cyclic hydrocarbon-based radical, bonded directly or *via* a methylene or ethylene group to the nitrogen atom, which are, where appropriate, substituted, under conditions suitable for establishing a covalent bond of carbamate type between the cellulose and each molecule of said organourea.

2. The process as claimed in claim 1, in which the operations for placing in contact under consideration in steps a) and b) are performed successively.

3. The process as claimed in claim 1, in which the operations for placing in contact under consideration in steps a) and b) are performed concomitantly.

4. The process as claimed in any one of the preceding claims, in which the supercritical CO₂ medium is generated *in situ* by heating liquid CO₂ under pressure.

5. The process as claimed in any one of the preceding claims, in which the operations for placing in contact under consideration in steps a) and b) are performed in the same reactor.

6. The process as claimed in claim 2, in which step a) is performed in solvent medium, especially in the presence of dimethyl sulfoxide, and step b) is performed in supercritical CO₂ medium.

7. The process as claimed in any one of the preceding claims, in which the concentration of primary organourea is between 1% and 20% by weight relative to the weight of cellulose to be treated.

8. The process as claimed in any one of the preceding claims, in which the concentration of dye is between 1% and 20% by weight relative to the weight of cellulose to be treated.

9. The process as claimed in any one of the preceding claims, in which the organourea is chosen from 4-methoxyphenylurea, octadecylurea and octylurea, N-phenylurea, benzylurea, butylurea, allylurea and 3-fluorophenylurea.

10. The process as claimed in any one of the preceding claims, in which the temperature applied in steps a) and b) is between 100°C and 140°C, preferably between 120°C and 130°C.

11. The process as claimed in any one of the preceding claims, in which the pressure applied in steps a) and b) is between 250 bar and 350 bar, preferably between 280 bar and 320 bar.

12. The process as claimed in any one of the preceding claims, in which the temperature and pressure conditions applied in steps a) and b), performed successively or concomitantly, are maintained for a time ranging from 1 minute to 60 minutes, more particularly from 10 minutes to 40 minutes.

13. The process as claimed in any one of the preceding claims, in which the cellulose is a paper cellulose.

14. A colored paper obtained according to the process described according to any one of the preceding claims.
